# EUROPÄISCHE PATENTSCHRIFT

(11) **EP 2 969 478 B1**
(45) Veröffentlichungstag und Bekanntmachung des Hinweises auf die Patenterteilung: **08.02.2017**
(21) Anmeldenummer: 14706055.2
(22) Anmeldetag: 25.02.2014
(51) Int. Cl.: B29C 69/00, B65D 5/74, B29C 65/08, B31B 70/60

(54) **SCHLAUCHBEUTEL, VERFAHREN UND VORRICHTUNG ZUR HERSTELLUNG VON SCHLAUCHBEUTELN**
TUBULAR BAG, METHOD AND DEVICE FOR PRODUCING TUBULAR BAGS
SACHET TUBULAIRE, PROCÉDÉ ET DISPOSITIF DE FABRICATION DE SACHETS TUBULAIRES

(30) Priorität: 12.03.2013 DE 102013204208
(43) Veröffentlichungstag der Anmeldung: 20.01.2016
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2014/053593
(87) Internationale Veröffentlichungsnummer: WO 2014/139788

(56) Entgegenhaltungen:
- EP-A1- 1 623 931
- WO-A1-98/14317

## Beschreibung

### Stand der Technik

### Offenbarung der Erfindung

Die Erfindung betrifft ein Verfahren zur Herstellung von Schlauchbeuteln nach Patentanspruch 1, einen verfahrensgemäß hergestellten Schlauchbeutel nach Patentanspruch 6 und eine Vorrichtung zur Durchführung eines der Verfahrensschritte des erfindungsgemäßen Verfahrens nach Patentanspruch 7.

Die Erfindung betrifft insbesondere ein Verfahren zur Herstellung von Schlauchbeuteln aus Kunststofffolie oder aus Verbundfolie mit einer beutelinhaltsseitigen Kunststoffschicht, mit einem auf dem Schlauchbeutel angebrachten selbstschneidenden Kunststoffverschluss bestehend aus einem Ausgussteil mit Befestigungsflansch, einem im Ausgussteil beweglich geführten Schneidorgan und einem Schraubdeckel mit Mitteln zur Betätigung des Schneidorgans gemäß dem Oberbegriff des Patentanspruchs 1. Bei einem solchen Verfahren wird eine Kunststofffolie oder eine Verbundfolie von einer Vorratsrolle einer Schlauchbeutelherstellungsmaschine zugeführt und separat zugeführte Kunststoffverschlüsse werden jeweils in einem Ausgussbereich eines Schlauchbeutels auf die Kunststofffolie oder Verbundfolie aufgeschweißt.

Bei flexiblen Behältern bzw. Schlauchbeuteln der genannten Art besteht die Anforderung, dass das Folienmaterial des Schlauchbeutels für das Aufschneiden mit dem Schneidorgan des Kunststoffverschlusses geeignet sein muss. Zugleich besteht aber auch die Anforderung, dass der Schlauchbeutel widerstandsfähig genug sein muss, um ein versehentliches Fallenlassen und den folgenden Aufprall auf dem Boden unbeschädigt zu überstehen. Diese beiden Anforderungen sind teilweise antagonistisch. Das problemlose Aufschneiden erfordert relativ spröde Materialien. Sicherheit vor einem Zerplatzen des Schlauchbeutels erhält man aber nur mit Materialien die eine relativ große Elastizität aufweisen.

Folienmaterialien von flexiblen Behältern haben oft höchst unterschiedliche Dehneigenschaften. Dabei geht es um das jeweilige Ausmaß der möglichen Dehnung bis zum Bruch, also um die Bruchdehnung. Folienmaterialien von geringer Elastizität wie beispielsweise Polypropylen (PP), abhängig natürlich auch von der jeweiligen Materialdicke, können in der Regel mit geringem Kraftaufwand zerschnitten werden. Spröde Strukturen wie Aluminium oder PET-SiOx sind ebenfalls leicht zerschneidbar. Polyethylen (PE) hingegen hat eine Elastizität (Bruchdehnung) von bis zu über 800% und bereitet deshalb Schwierigkeiten beim Zerschneiden. Polyethylen ist für bruchsichere flexible Behälter (beim erwähnten Fallenlassen) aber eine Notwendigkeit.

Zudem sind die Dehneigenschaften der verschiedenen eingesetzten Folienmaterialien auch noch abhängig vom angewendeten Bearbeitungsverfahren. Die erreichten Werte der Bruchdehnung sind in Längsrichtung (also in Bearbeitungs- bzw. Schneidrichtung) typischerweise höher als in Querrichtung (also quer zur Bearbeitungs- bzw. Schneidrichtung).

Außerdem muss bei Verbundfolien mit Schichten aus unterschiedlichen Materialien zusätzlich noch in Betracht gezogen werden, dass bei einem Versagen des vorliegenden Verbundes (im Schneidbereich) das Material mit der höchsten Elastizität, also eben beispielsweise Polyethylen, die effektive Bruchdehnung bestimmt.

Weil Schlauchbeutel der genannten Art zumeist zum Transport und zur Lagerung empfindlicher Inhalte wie beispielsweise von Lebensmitteln verwendet werden, muss natürlich auch die Integrität der Packung bis zum Öffnen durch den Verbraucher erhalten werden. Die flexiblen Behälter müssen also auch diesbezüglich oftmals eine Reihe von weiteren Anforderungen erfüllen.

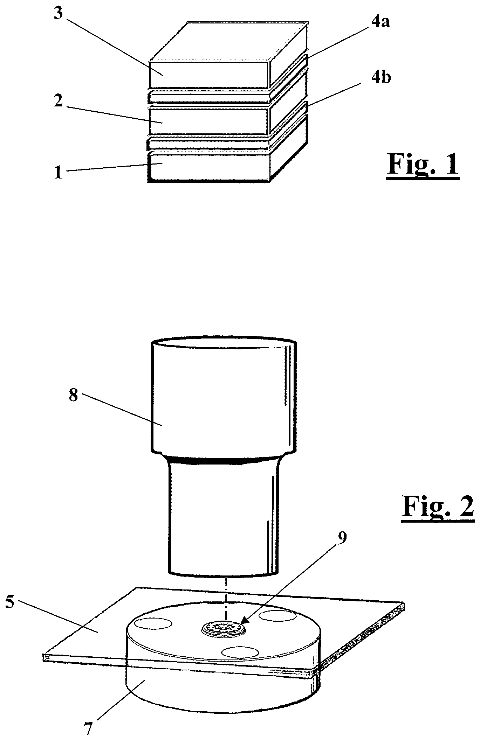

Man setzt deshalb Folienmaterialien ein, die möglichst allen erwähnten Anforderungen gerecht werden. Dies sind dann in der Regel eben Folienmaterialien bzw. Verbundmaterialien, die einerseits den Festigkeits-, Dichtigkeits- und Hygieneanforderungen genügen und die andererseits aber auch spezifisch auf eine gute oder zumindest hinreichend gute Zerschneidbarkeit ausgelegt sind. Ein Beispiel des Schichtaufbaus einer gängigerweise eingesetzten Verbundfolie ist in der Figur 1 dargestellt. Insgesamt bleibt die einwandfreie Zerschneidbarkeit mit einem im Ausgussteil angeordneten Schneidorgan aber oftmals weiterhin ein Problem, was aber generell auch damit zusammenhängt, dass man im Verlauf des Schneidvorgangs unterschiedliche und meist auch nur sehr schwierig beherrschbare Verhältnisse in der Spannung des (verbleibenden und noch nicht fertig ausgeschnittenen) Folienmateriales antrifft. Man sucht deshalb nach weiteren Möglichkeiten zur Verbesserung der kontrollierten Zerschneidbarkeit. Einige bekannte Möglichkeiten zur Verbesserung der Zerschneidbarkeit bestehen darin, den Schichtaufbau im Bereich der Schneidzone gezielt zu schwächen, beispielsweise durch Laser-Ritzen oder durch andere vorgängig angebrachte Teil-Perforierungen.

Aus der WO 98/14317 A1 ist bereits ein Verfahren zur Herstellung von Schlauchbeuteln mit selbstschneidendem Kunststoffverschluss bekannt Es ist deshalb die Aufgabe der Erfindung, ein Verfahren zur Herstellung von Schlauchbeuteln aus Kunststofffolie oder aus Verbundfolie mit einer beutelinhaltsseitigen Kunststoffschicht anzugeben, mit dem auf einfache Weise verbesserte und zuverlässig reproduzierbare Aufschneideigenschaften des Schlauchbeutels erzielbar sind.
Diese Aufgabe wird durch die Merkmalskombination des Patentanspruchs 1 gelöst. Die Lösung besteht darin, dass die Kunststofffolie oder die Verbundfolie in dem ringförmigen Bereich, der zum Durchschneiden mit dem Schneidorgan vorgesehen ist, mit einem thermischen Prägeverfahren beutelinnenseitig verdünnt wird, und dass danach der Kunststoffverschluss so auf der Kunststofffolie oder der Verbundfolie positioniert und aufgeschweißt wird, dass das im Ausgussteil lagernde Schneidorgan bei dessen Betätigung, d.h. beim Öffnen des Schlauchbeutels durch Drehen des Schraubdeckels, im verdünnten ringförmigen Bereich wirksam werden kann.
Einer der Hauptvorteile besteht natürlich darin, dass thermische Prägeverfahren, die an sich bekannt sind, auf sehr einfache Weise in den mit einer
Schlauchbeutelherstellungsmaschine realisierten Herstellungsverlauf integrierbar sind. Ein bevorzugtes thermisches Prägeverfahren ist dabei das Ultraschall-Prägeverfahren.

Beim Ultraschall-Prägeverfahren hat ein Amboss die Funktion eines Stempels und eine Sonotrode drückt das durch Ultraschall erwärmte Material auf den Stempel, so dass es in der Oberfläche mechanisch und thermisch umgeformt wird. Nach dem Abkühlen des Materials ist die Prägung abgeschlossen. Das Verfahren eignet sich besonders auch für die Prägung von thermoplastischen Folien. Da das Material durch Ultraschallschwingungen erwärmt wird, ist der Kraftaufwand beim Ultraschall-Prägen deutlich geringer als bei mechanischen Verfahren. Weitere Vorteile sind die kurzen Prägezeiten und die Einfachheit der Technik selbst.

Weil das beim thermischen Prägeverfahren beim Schmelzprozess aus den eingeprägten Vertiefungen verdrängte Material nicht einfach verschwindet, sondern sich in der Regel in der Umgebung der Prägestelle akkumuliert, kann nach dem Prägevorgang und vor der Bereitstellung der Kunststofffolie oder der Verbundfolie für den eigentlichen Schlauchbeutelherstellungsprozess noch ein Einwalzen oder Einpressen erforderlich sein um die entstandenen Unebenheiten auszugleichen oder zu reduzieren. Das kann in einer nachgeschalteten Walz- oder Pressstufe geschehen. Man muss nämlich davon ausgehen, dass die Bereitstellung von bereits geprägter Folie auf Vorratsrollen wegen noch vorhandener Unebenheiten und Verdickungen ansonsten zu unförmlich großen und meist schlecht handhabbaren Vorratsrollen führen würde, insbesondere deshalb, weil die Präzision des Auf- und Abwickelns und damit auch die Führung der Folienbahn im Bereitstellungsprozess gestört wäre.

Grundsätzlich kann das Verfahren zur Herstellung von Schlauchbeuteln also so gestaltet sein, dass eine Vorratsrolle bereits geprägtes Folienmaterial enthält und dieses der Schlauchbeutelherstellungsmaschine zugeführt wird. Es kann aber auch sein, dass die Vorratsrolle noch nicht geprägtes Folienmaterial enthält und dass das thermische Prägeverfahren erst in der Schlauchbeutelherstellungsmaschine selbst ausgeführt wird. Im letzteren Fall dürfte ein nachträgliches Einwalzen oder Einpressen der beim Prägevorgang entstandenen Materialakkumulierungen jedoch nicht mehr notwendig sein.

Jedenfalls aber lässt sich mit dem erfindungsgemäßen Verfahren ein Schlauchbeutel aus Kunststofffolie oder aus einer Verbundfolie mit einer beutelinnenseitigen Kunststoffschicht herstellen, bei dem die Kunststofffolie oder Verbundfolie in einem ringförmigen Bereich der zum Durchschneiden mit dem Schneidorgan vorgesehen ist, beutelinnenseitig eine Verdünnung aufweist. Diese Verdünnung bedeutet eine Schwächung des Folienmaterials und das Folienmaterial ist deshalb an dieser Stelle mit dem Schneidorgan leichter und zuverlässiger durchtrennbar. Da zudem auch damit gerechnet werden kann, dass der thermische Prägevorgang im Prägebereich infolge Hitzeeinwirkung zusätzliche lokale Veränderungen der Materialeigenschaften im Kunststoff bewirkt, nämlich eine lokale Erhöhung der Sprödheit, bewirkt auch dies eine leichtere Durchtrennbarkeit.

Der Vorgang des thermischen Einprägens ist als einer der notwendigen Verfahrensschritte zur Herstellung eines erfindungsgemäßen Schlauchbeutels zu sehen. Dabei wird vorausgesetzt, dass die übrigen Verfahrensschritte zur Herstellung eines derartigen Schlauchbeutels dem Fachmann hinlänglich bekannt sein dürften und sie werden deshalb im Folgenden auch nicht näher beschrieben.

Erfindungsgemäss wird für den Vorgang des thermischen Einprägens, vorzugsweise des Ultraschall-Prägens, eine dazu besonders geeignete Vorrichtung eingesetzt. Diese Vorrichtung beinhaltet einen Amboss mit einem ringartig erhöhten Steg mit einem im Wesentlichen ebenen Plateaubereich, wobei der Steg eine Vielzahl von Ableitungskanälen aufweist, die innen- und außenliegend angeordnet sind. Steg, Plateaubereich und Ableitungskanäle sind dabei so gewählt und angeordnet, dass der Prägevorgang schnell, effizient und störungsfrei durchgeführt werden kann. Details dazu können der nachstehenden Beschreibung des Ausführungsbeispiels entnommen werden.

Das offenbarte Verfahren und die Vorrichtung zur Durchführung des Verfahrensschrittes mit der Anwendung des thermischen Prägeverfahrens zur beutelinnenseitigen Verdünnung der Kunststofffolie oder der Verbundfolie in einem ringförmigen Bereich lässt sich natürlich nicht nur mit einem Ultraschall-Prägeverfahren realisieren. Andere thermische Prägeverfahren, beispielsweise solche mit elektrisch beheiztem Amboss, können mit einer identischen oder gleichartigen Vorrichtung realisiert werden, allerdings dürfte der Energieverbrauch für die Beheizung dann wohl höher liegen. Beim Ultraschall-Prägen muss die Ultraschall-Energie nämlich nur zum Zeitpunkt des eigentlichen Prägevorganges zur Verfügung stehen.

In der Folge wird die Erfindung anhand eines bevorzugten Ausführungsbeispiels näher beschrieben. Dabei zeigt
Fig. 1 den Schichtaufbau einer bekannten Verbundfolie zur Herstellung von Schlauchbeuteln,
Fig. 2 den prinzipiellen Aufbau einer erfindungsgemäßen Ultraschall-Prägeeinrichtung,
Fig. 3 eine Teilschnittzeichnung eines Kunststoffverschlusses an einem Schlauchbeutel,
Fig. 4 einen Amboss einer Ultraschall-Prägeeinrichtung mit ringartigem Steg in räumlicher Darstellung,
Fig. 5 den Steg von Fig. 4 in räumlicher Darstellung
Fig. 6 den Amboss von Fig. 4 in einer Draufsicht, und
Fig. 7 die prinzipielle Anordnung einer Walzstufe nach einer Ultraschall-Prägeeinrichtung.

Die Fig. 1 zeigt den Schichtaufbau einer bekannten Verbundfolie zur Herstellung von Schlauchbeuteln. Eine Innenschicht 1 besteht aus LLDPE, also aus einem linearen Polyethylen niederer Dichte, eine Barriereschicht 2 aus Aluminium/PET oder SiOx, also aus aluminiummetallisierten Polyethylenterephthalat oder Siliziumoxyd und eine Außenschicht 3 aus PP, also aus Polypropylen. Sowohl LLDPE wie auch PET und PP sind Thermoplaste und insbesondere LLDPE und PP haben hohe Bruchdehnungswerte. Zwischen diesen Schichten befinden sich Klebeschichten 4a, 4b.

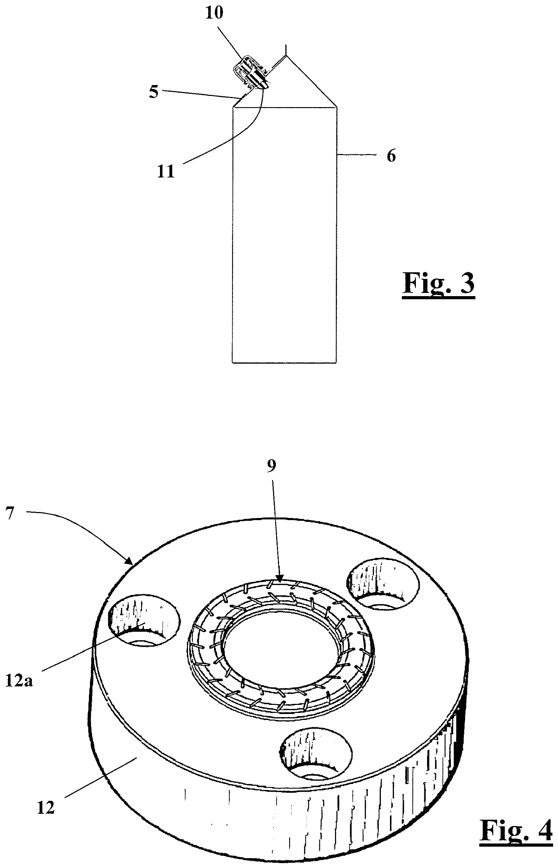

Die Fig. 2 zeigt den prinzipiellen Aufbau einer erfindungsgemäßen Ultraschall-Prägeeinrichtung. Dabei wird das Folienmaterial 5 zur Herstellung von Schlauchbeuteln 6 (siehe dazu auch Fig. 3) zwischen einem Amboss 7 und einem Ultraschallwerkzeug 8, einer sogenannten Sonotrode, geführt, und zwar in einer Weise, dass zumindest die beutelinhaltsseitig vorgesehene Schicht des Folienmaterials 5 eine Kunststoff- bzw. Thermoplastschicht ist und mit dem Amboss 7 in Berührung gelangen kann. Als Folienmaterial 5 kann beispielsweise die in der Fig. 1 dargestellten Verbundfolie verwendet werden. Der Amboss 7 hat einen ringförmig erhöhten Steg 9 der die eigentliche Prägeform darstellt. Das Ultraschallwerkzeug 8 ist eine Sonotrode bekannter Ausführung. Zur Durchführung eines einzelnen Prägevorgangs wird das Folienmaterial 5, das zwischen dem Amboss 7 und dem Ultraschallwerkzeug 8 durchgezogen wird, kurzzeitig an der Stelle angehalten, an der ein Kunststoffverschluss 10 aufgeschweißt werden soll. Dann wird das Ultraschallwerkzeug 8 unter Druck auf den Amboss 7 abgesenkt, wodurch das Folienmaterial 5 zwischen dem Steg 9 und dem Ultraschallwerkzeug eingeklemmt wird. Durch Aktivierung des Ultraschallwerkzeugs 8 wird zumindest die beutelinnenseitige Thermoplast- bzw. Kunststoffschicht des Folienmaterials 5 erwärmt und geschmolzen und unter Wirkung des Anpressdruckes verdrängt. Auf diese Weise entsteht die Prägung bzw. der verdünnte ringförmige Bereich im Folienmaterial 5.

Die Fig. 3 zeigt eine Teilschnittzeichnung eines Kunststoffverschlusses 10 an einem Schlauchbeutel 6. Es dürfte klar sein, dass diese Figur lediglich Beispielcharakter hat, denn selbstverständlich eignet sich das Verfahren für eine Vielzahl von möglichen Schlauchbeutelformen. Veranschaulicht ist hier aber, dass der Kunststoffverschluss 10 stets an einer definierten Stelle in einem Ausgussbereich auf das Folienmaterial 5 des Schlauchbeutels 6 aufgeschweißt wird. Angedeutet ist in dieser Figur auch der Zustand in dem das Folienmaterial 5 vom Schneidorgan 11, das im Innern des Ausgussteils beweglich geführt ist, bereits aufgeschnitten worden ist. Man erkennt nämlich, dass ein Teil des Schneidorgans ins Innere des Schlauchbeutels 6 hineinragt.

Die Fig. 4 zeigt den Amboss 7 einer Ultraschall-Prägeeinrichtung mit dem ringartigen Steg 9 in räumlicher Darstellung. Der Amboss 7 umfasst ein Basisteil 12 mit Befestigungsausnehmungen 12a. Auf dem Basisteil 12 ist der ringartig erhöhte Steg 9 zentrisch angeordnet. Der ringartig erhöhte Steg 9 ist dabei vorzugsweise einstückig am Basisteil 12 angeformt.

Das Basisteil 12 besitzt die nötige Größe und Festigkeit um den vom absenkbaren Ultraschallwerkzeug 8 ausgeübten Kräften widerstehen zu können. Der erhöhte Steg 9 dient natürlich dazu, die Prägekraft im Prägebereich zu zentrieren und er verfügt auch über ein spezielles Oberflächenprofil das geeignet ist um den bei der Anwendung des thermischen Prägeverfahren im Prägebereich schmelzenden Kunststoff rasch und zuverlässig zu verdrängen.

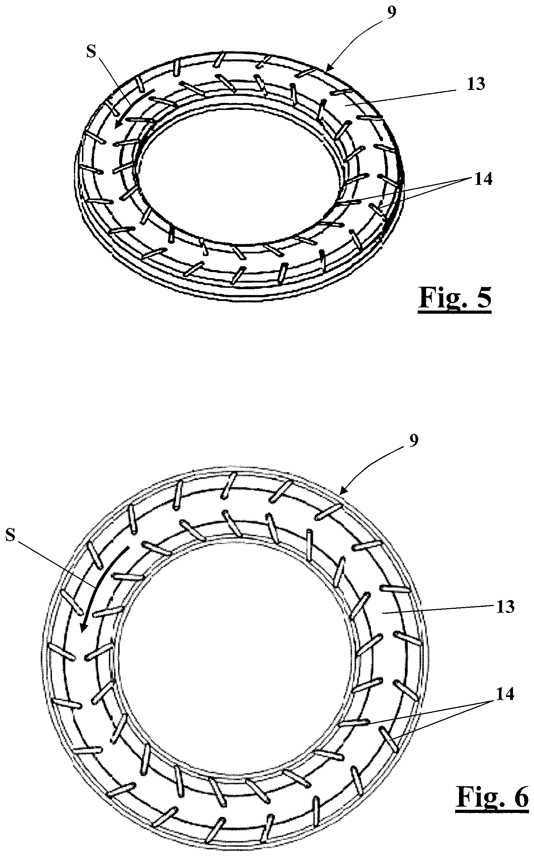

Die Figuren 5 und 6 zeigen den Steg von Fig. 4 detaillierter in räumlicher Darstellung und in einer Draufsicht. Man erkennt, dass der ringartig erhöhte Steg 9 in seiner Mitte einen im Wesentlichen ebenen Plateaubereich 13 aufweist und dass er auch eine Vielzahl von Ableitungskanälen 14 hat, die innen- und außenliegend angeordnet sind, und zwar in einer Weise, dass sie einerseits vom Plateaubereich 13 in einen Zentrumsbereich und andererseits vom Plateaubereich 13 in einen Peripheriebereich verlaufen.

Man erkennt auch, dass die Ableitungskanäle 14 beidseits nicht-querend in den Plateaubereich 13 hineinragen und dass die Ableitungskanäle 14 untereinander auch nicht in Verbindung stehen. Ferner sind die Ableitungskanäle 14 in einer Weise angeordnet, dass sie paarweise rückwärts geneigt zu einer Schneidrichtung S des Schneidorgans verlaufen, wobei sie zumindest annähernd von der Mitte des Plateaubereichs 13 ausgehen. Die Schneidrichtung S ist die Richtung, in die das Schneidorgan des Kunststoffverschlusses beim Durchschneiden durch das Folienmaterial geführt wird.

Der (im Verhältnis Steg 9 als Ganzes) relativ breite Plateaubereich 13 dient einerseits dazu Beschädigungen an der verbleibenden Struktur des Folienmaterials 5 zu vermeiden, andererseits soll damit auch ein gewisser Toleranzbereich bei der Ausrichtung bzw. Platzierung des Kunststoffverschlusses auf dem Folienmaterial geschaffen werden. Wie erwähnt, sind die Ableitungskanäle so dimensioniert und angeordnet, dass der geschmolzene Kunststoff rasch möglichst aus dem Plateaubereich verdrängt wird. Die paarweise Rückwärtsneigung der Ableitungskanäle 14 im Vergleich zur Schneidrichtung S hat damit zu tun, dass der geschmolzene und verdrängte Kunststoff dazu neigt, beim Erkalten in genau diesen Bereichen Materialverdickungen zu bilden. Man erreicht also, dass sich das geprägte Folienmaterial 5 beim Aufschneiden mit dem Schneidorgan im Bereich der Schneidkante besser auseinanderfalten kann und so einen Beitrag dazu leistet, dass sich das zum Öffnen bzw. Aufschneiden aufzubringende Drehmoment nicht unnötig vergrößert. Es hat sich auch gezeigt, dass unerwünschte Faserbildungen die beim Aufschneidvorgang manchmal entstehen und die bewirken können, dass das auszuschneidende Folienteil dennoch in ungünstiger Weise über der beabsichtigten Öffnung hängenbleibt, auf diese Weise reduziert werden. Die Faserbildung wird auch dadurch reduziert, dass die Heißprägung die physikalischen Eigenschaften in Bezug auf die Elastizität verändert.

Versuche mit verschiedenartigen Folienmaterialstrukturen haben gezeigt, dass sich mit dem erfindungsgemäßen thermischen Prägeverfahren zur Schaffung eines verdünnten ringförmigen Bereiches und der damit einhergehenden Schwächung des Folienmaterials in den ringförmigen Bereichen nicht nur signifikant kleinere Drehmomente zum Öffnen bzw. Aufschneiden der flexiblen Behälter erzielen lassen, sondern dass damit auch die Erfolgsraten beim problemlosen Öffnen signifikant gesteigert werden.

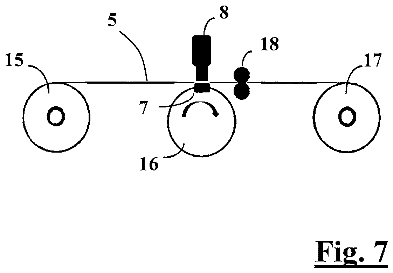

Schließlich zeigt die Fig. 7 noch die prinzipielle Anordnung einer Walzstufe nach einer Ultraschall-Prägeeinrichtung. Wie bereits früher erwähnt, kann eine solche Einrichtung dazu dienen, beim Prägevorgang entstandene Unebenheiten auszugleichen und/oder zu reduzieren. Es hat sich nämlich gezeigt, dass ansonsten die in den Ausflussbereichen der Ableitungskanäle entstandenen Materialverdrängungen etwa die doppelte Filmdicke des Folienmaterials erreichen können, was natürlich für die weitere Rollenverarbeitung höchst unerwünscht ist, weil es das gleichmäßige Auf- und Abrollen beeinträchtigt und auch zu sehr viel dickeren Rollen führt. Gleichmäßiges und gut kontrollierbares Auf- und Abrollen von Folienmaterial ist beim Herstellungsprozess von Schlauchbeuteln aber von Bedeutung, weil unter anderem die ortsgenaue Positionierung des Kunststoffverschlusses sonst beeinträchtigt wäre.

Bei der Verwendung einer Walzstufe wird das ungeprägte Folienmaterial 5 zunächst von einer Abrolleinrichtung 15 einer thermischen Prägeeinrichtung oder Ultraschall-Prägeeinrichtung zugeführt. Die Ultraschall-Prägeeinrichtung besteht aus dem Ultraschallwerkzeug 8 und einem darunter angeordneten Drehzylinder 16 auf dem ein oder mehrere Ambosse 7 angeordnet sind. Das Folienmaterial 5 wird dabei positionsgesteuert zwischen dem Ultraschallwerkzeug 8 und dem Drehzylinder bzw. dem jeweilig unter dem Ultraschallwerkzeug 8 liegenden Amboss hindurchgezogen und auf einer Vorratsrolle 17 aufgewickelt. Unmittelbar angrenzend an die Ultraschall-Prägeeinrichtung ist eine Walzstufe mit Presswalzen 18 angeordnet. Die Walzstufe befindet sich in einem Bereich, in dem das vom Ultraschall-Prägevorgang noch warme Folienmaterial im Prägebereich auf eine gewünschte Dicke komprimiert werden kann. Das gewalzte Folienmaterial 5 wird anschließend unter einer definierten Zugspannung auf der Vorratsrolle 17 aufgerollt.

Es wurde eingangs bereits erwähnt, dass das thermische Prägeverfahren entweder bereits im Vorstufenbereich, d.h. bei der Bereitstellung von Folienmaterial für eine Schlauchbeutelherstellungsmaschine, oder in der Schlauchbeutelherstellungsmaschine selber angewendet werden kann. Grundsätzlich kann das Verfahren zur Herstellung von Schlauchbeuteln also so gestaltet sein, dass die Vorratsrolle, von der Folienmaterial dem eigentlichen Beutelherstellungsprozess zugeführt wird, bereits geprägtes Folienmaterial enthält. Es kann aber auch sein, dass die Vorratsrolle noch nicht geprägtes Folienmaterial enthält und dass das thermische Prägeverfahren erst in der Schlauchbeutelherstellungsmaschine selbst ausgeführt wird. Im letzteren Fall dürfte ein nachträgliches Einwalzen oder Einpressen der beim Prägevorgang entstandenen Materialakkumulierungen jedoch nicht mehr notwendig sein weil erneute Aufrollvorgänge dann natürlich entfallen.

## Patentansprüche

1. Verfahren zur Herstellung von Schlauchbeuteln (6) aus Kunststofffolie oder aus Verbundfolie mit einer beutelinhaltsseitigen Kunststoffschicht, mit einem auf dem Schlauchbeutel (6) angebrachten selbstschneidenden Kunststoffverschluss (10) bestehend aus einem Ausgussteil mit Befestigungsflansch, einem im Ausgussteil beweglich geführten Schneidorgan (11) und einem Schraubdeckel mit Mitteln zur Betätigung des Schneidorgans,
wobei die Kunststofffolie oder Verbundfolie von einer Vorratsrolle (17) einer Beutelherstellungsmaschine zugeführt wird und der Kunststoffverschluss (10) jeweils in einem Ausgussbereich eines Schlauchbeutels (6) auf die Kunststofffolie oder Verbundfolie aufgeschweißt wird,
**dadurch gekennzeichnet, dass**
die Kunststofffolie oder die Verbundfolie in einem ringförmigen Bereich der zum Durchschneiden mit dem Schneidorgan (11) vorgesehen ist mit einem thermischen Prägeverfahren beutelinnenseitig verdünnt wird, und dass danach der Kunststoffverschluss (10) so auf der Kunststofffolie oder der Verbundfolie positioniert und aufgeschweißt wird, dass das im Ausgussteil lagernde Schneidorgan (11) bei dessen Betätigung im verdünnten ringförmigen Bereich wirksam werden kann.

2. Verfahren nach Patentanspruch 1, **dadurch gekennzeichnet, dass** das thermische Prägeverfahren ein Ultraschall-Prägeverfahren ist.

3. Verfahren nach Patentanspruch 1 oder 2, **dadurch gekennzeichnet, dass** die Kunststofffolie oder die Verbundfolie vorgängig und außerhalb der Beutelherstellungsmaschine mit dem thermischen Prägeverfahren in den ringförmigen Bereichen verdünnt wird und anschließend auf der Vorratsrolle (17) bereitgestellt wird.

4. Verfahren nach Patentanspruch 1 oder 2, **dadurch gekennzeichnet, dass** die Kunststofffolie oder die Verbundfolie innerhalb der Beutelherstellungsmaschine mit dem thermischen Prägeverfahren in den ringförmigen Bereichen verdünnt wird.

5. Verfahren nach Patentanspruch 3, **dadurch gekennzeichnet, dass** die Kunststofffolie oder die Verbundfolie unmittelbar nach der Anwendung des thermischen Prägeverfahrens eine Walz- oder Pressstufe durchläuft um Unebenheiten auszugleichen oder zu reduzieren und anschließend auf der Vorratsrolle (17) bereitgestellt wird.

6. Schlauchbeutel (6) aus Kunststofffolie oder aus Verbundfolie mit einer beutelinnenseitigen Kunststoffschicht, mit einem auf dem Schlauchbeutel (6) angebrachten selbstschneidenden Kunststoffverschluss (10), bestehend aus einem Ausgussteil mit Befestigungsflansch, einem im Ausgussteil beweglich geführten Schneidorgan (11) und einem Schraubdeckel mit Mitteln zur Betätigung des Schneidorgans (11),
**dadurch gekennzeichnet, dass**
die Kunststofffolie oder Verbundfolie in einem ringförmigen Bereich der zum Durchschneiden mit dem Schneidorgan vorgesehen ist, beutelinnenseitig eine Verdünnung aufweist.

7. Vorrichtung zur Durchführung des Verfahrensschrittes mit der Anwendung des thermischen Prägeverfahrens zur beutelinnenseitigen Verdünnung der Kunststofffolie oder der Verbundfolie in einem ringförmigen Bereich nach Patentanspruch 1,
**dadurch gekennzeichnet, dass**
ein Amboss (7) mit einem ringartig erhöhten Steg (9) mit einem im Wesentlichen ebenen Plateaubereich (13) vorhanden ist, und dass der Steg (9) eine Vielzahl von Ableitungskanälen (14) aufweist, die innen- und außenliegend angeordnet sind.

8. Vorrichtung nach Patentanspruch 7, **dadurch gekennzeichnet, dass** die Ableitungskanäle (14) nicht-querend in den Plateaubereich (13) hineinragen.

9. Vorrichtung nach Patentanspruch 7 oder 8, **dadurch gekennzeichnet, dass** die Ableitungskanäle (14) untereinander nicht in Verbindung stehen.

10. Vorrichtung nach einem der Patentansprüche 7 bis 9, **dadurch gekennzeichnet, dass** die Ableitungskanäle (14) in einer Weise angeordnet sind, dass sie paarweise rückwärts geneigt zu einer Schneidrichtung (S) des Schneidorgans (11) verlaufen.

## Claims

1. Method for producing tubular bags (6) from plastic film or from composite film with a plastic layer on the bag content side, with a self-cutting plastic closure (10) attached to the tubular bag (6) and consisting of a spout part with a fastening flange, a cutting element (11), which is movably guided in the spout part, and a screw cover with means for actuating the cutting element,
the plastic film or composite film being fed from a supply roll (17) to a bag-making machine and the plastic closure (10) in each case being welded onto the plastic film or composite film in a spout region of a tubular bag (6),
**characterized in that**
the plastic film or the composite film is thinned by a thermal stamping process on the inside of the bag in an annular region that is intended for being cut through with the cutting element (11), and **in that** thereafter the plastic closure (10) is positioned and welded on the plastic film or the composite film such that, when it is actuated, the cutting element (11) mounted in the spout part can become effective in the thinned, annular region.

2. Method according to Patent Claim 1, **characterized in that** the thermal stamping process is an ultrasonic stamping process.

3. Method according to Patent Claim 1 or 2, **characterized in that** the plastic film or the composite film is thinned in the annular region by the thermal stamping process in advance and outside the bag-making machine and is subsequently provided on the supply roll (17).

4. Method according to Patent Claim 1 or 2, **characterized in that** the plastic film or the composite film is thinned in the annular regions by the thermal stamping process inside the bag-making machine.

5. Method according to Patent Claim 3, **characterized in that** the plastic film or the composite film runs through a rolling or pressing stage immediately after the use of the thermal stamping process in order to smooth out or reduce irregularities and is subsequently provided on the supply roll (17).

6. Tubular bag (6) of plastic film or of composite film with a plastic layer on the bag content side, with a self-cutting plastic closure (10) attached to the tubular bag (6) and consisting of a spout part with a fastening flange, a cutting element (11), which is movably guided in the spout part, and a screw cover with means for actuating the cutting element (11),
**characterized in that**
the plastic film or composite film has a thinning on the inside of the bag in an annular region that is intended for being cut through with the cutting element.

7. Device for carrying out the method step involving use of the thermal stamping process for thinning the plastic film or the composite film on the inside of the bag in an annular region according to Patent Claim 1,
**characterized in that**
there is an anvil (7) with a web (9), which is elevated in a ring-like manner and comprises a substantially planar plateau region (13), and **in that** the web (9) has a plurality of discharge channels (14), which are arranged lying on the inside and the outside.

8. Device according to Patent Claim 7, **characterized in that** the discharge channels (14) protrude into the plateau region (13) in a non-crossing fashion.

9. Device according to Patent Claim 7 or 8, **characterized in that** the discharge channels (14) are not connected to one another.

10. Device according to one of Patent Claims 7 to 9, **characterized in that** the discharge channels (14) are arranged in such a way that they extend in pairs so as to incline backwards with respect to a cutting direction (S) of the cutting element (11).

## Revendications

1. Procédé de fabrication de sachets tubulaires (6) à partir d'un film de matière plastique ou d'un film composite comportant une couche de matière plastique à l'intérieur du sachet, avec une fermeture auto-tranchante en matière plastique (10) posée sur le sachet tubulaire (6), qui se compose d'une pièce de versage avec une bride de fixation, d'un organe de coupe (11) guidé en mouvement dans la pièce de versage et d'un couvercle à visser avec des moyens pour l'actionnement de l'organe de coupe, dans lequel on amène le film de matière plastique ou le film composite depuis un rouleau de stockage (17) à une machine de fabrication de sachets et on soude la fermeture en matière plastique (10) sur le film de matière plastique ou sur le film composite respectivement dans une région de versage d'un sachet tubulaire (6), **caractérisé en ce que** l'on amincit le film de matière plastique ou le film composite sur le côté intérieur du sachet avec un procédé de repoussage thermique dans une région annulaire qui est prévue pour la coupe avec l'organe de coupe (11), et **en ce que** l'on positionne et on soude ensuite la fermeture en matière plastique (10) sur le film de matière plastique ou sur le film composite de telle manière que l'organe de coupe (11) placé dans la pièce de versage puisse être actif dans la région annulaire amincie lors de son actionnement.

2. Procédé selon la revendication 1, **caractérisé en ce que** le procédé de repoussage thermique est un procédé de repoussage par ultrasons.

3. Procédé selon la revendication 1 ou 2, **caractérisé en ce que** l'on amincit le film de matière plastique ou le film composite au préalable et à l'extérieur de la machine de fabrication de sachets avec le procédé de repoussage thermique dans les régions annulaires et on le prépare ensuite sur le rouleau de stockage (17).

4. Procédé selon la revendication 1 ou 2, **caractérisé en ce que** l'on amincit le film de matière plastique ou le film composite avec le procédé de repoussage thermique dans les régions annulaires à l'intérieur de la machine de fabrication de sachets.

5. Procédé selon la revendication 3, **caractérisé en ce que** le film de matière plastique ou le film composite traverse immédiatement après l'application du procédé de repoussage thermique un étage de laminage ou de pressage afin d'éliminer ou de réduire les inégalités et on le prépare ensuite sur le rouleau de stockage (17).

6. Sachet tubulaire (6) en un film de matière plastique ou un film composite avec une couche de matière plastique à l'intérieur du sachet, muni d'une fermeture auto-tranchante en matière plastique (10) posée sur le sachet tubulaire (6), qui se compose d'une pièce de versage avec une bride de fixation, d'un organe de coupe (11) guidé en mouvement dans la pièce de versage et d'un couvercle à visser avec des moyens pour l'actionnement de l'organe de coupe (11), **caractérisé en ce que** le film de matière plastique ou le film composite présente dans une région annulaire, qui est prévue pour la coupe avec l'organe de coupe, un amincissement sur le côté intérieur du sachet.

7. Dispositif pour la mise en oeuvre de l'étape de procédé avec l'application du procédé de repoussage thermique pour l'amincissement du film de matière plastique ou du film composite sur le côté intérieur du sachet dans une région annulaire selon la revendication 1, **caractérisé en ce qu'**il se trouve une enclume (7) avec une nervure surélevée de type annulaire (9) avec une zone de plateau (13) essentiellement plane, et **en ce que** la nervure (9) présente une multiplicité de canaux d'évacuation (14), qui sont disposés en position intérieure et extérieure.

8. Dispositif selon la revendication 7, **caractérisé en ce que** les canaux d'évacuation (14) pénètrent dans la zone de plateau (13) sans la traverser.

9. Dispositif selon la revendication 7 ou 8, **caractérisé en ce que** les canaux d'évacuation (14) ne sont pas en communication les uns avec les autres.

10. Dispositif selon l'une quelconque des revendications 7 à 9, **caractérisé en ce que** les canaux d'évacuation (14) sont disposés de telle manière qu'ils soient placés par paires avec une inclinaison vers l'arrière par rapport à une direction de coupe (S) de l'organe de coupe (11).
